# EUROPEAN PATENT APPLICATION

(11) **EP 4 793 239 A1**
(43) Date of publication of application: **19.08.2026**
(21) Application number: 24877641.1
(22) Date of filing: 11.10.2024
(51) Int. Cl.: C01G 53/00, H01M 4/505, H01M 4/525, H01M 4/131, H01M 10/052, H01M 4/02

(54) **MANUFACTURING METHOD OF POSITIVE ELECTRODE ACTIVE MATERIAL FOR LITHIUM SECONDARY BATTERY, POSITIVE ELECTRODE ACTIVE MATERIAL FOR LITHIUM SECONDARY BATTERY, AND LITHIUM SECONDARY BATTERY COMPRISING SAME**

(30) Priority: 11.10.2023 KR 20230135231
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: JUNG, Keeyoung, Pohang-si, Gyeongsangbuk-do 37673 (KR); PARK, Yooncheol, Pohang-si, Gyeongsangbuk-do 37673 (KR); PARK, Inchul, Incheon 22008 (KR); YU, Byongyong, Incheon 22003 (KR); CHOI, Geunho, Incheon 21525 (KR); YANG, Choongmo, Pohang-si, Gyeongsangbuk-do 37673 (KR); HWANG, Soon Cheol, Pohang-si, Gyeongsangbuk-do 37671 (KR)
(74) Representative: Zacco Sweden AB
(86) International application number: PCT/KR2024/096326
(87) International publication number: WO 2025/080106

(57) **Abstract**

The present invention relates to a method for manufacturing a positive electrode active material for a lithium secondary battery, the method comprising: preparing a manganese-excess transition metal precursor having a molar ratio (Mn/M) of manganese (Mn) to transition metal (M) of 0.5 to 0.75; oxidizing the transition metal precursor by performing a first calcination; and forming a lithium and manganese-excess lithium transition metal oxide by lithiating the oxidized transition metal precursor through a second calcination.

## Description

### [Technical Field]

The present invention relates to a method for manufacturing a positive electrode active material for a lithium secondary battery, a positive electrode active material for a lithium secondary battery, and a lithium secondary battery comprising the same.

### [Background Art]

The market for electric vehicles employing lithium secondary batteries is expanding significantly. Currently, lithium secondary batteries for electric vehicles employ ternary layered compounds (NCM-based or NCA-based) as a positive electrode active material, and the energy density is being continuously improved by increasing the Ni content. However, there is a limit for ternary layered compounds to satisfy continuous market demands, such as further cost reduction, further increase in energy density, and use of sustainable materials.

Accordingly, lithium-excess layered positive electrode active materials (OLO: Over-lithiated Oxide or LLO: Li-rich Layered Oxide), which have low Ni content and are capable of high capacity through anion oxidation/reduction, are being revisited.

### [Detailed Description of the Invention]

### [Technical Problem]

One object of the present invention is to provide a method for manufacturing a positive electrode active material, a positive electrode active material, and a secondary battery comprising the same, which are lithium transition metal oxides having a lithium and manganese-excess composition and have uniformly improved capacity, initial efficiency, and output characteristics.

### [Technical Solution]

One embodiment of the present invention provides a method for manufacturing a positive electrode active material for a lithium secondary battery, the method comprising: preparing a manganese-excess transition metal precursor having a molar ratio (Mn/M) of manganese (Mn) to transition metal (M) of 0.5 to 0.75; oxidizing the transition metal precursor by performing a first calcination; and forming a lithium and manganese-excess lithium transition metal oxide by lithiating the oxidized transition metal precursor through a second calcination.

A lithium raw material may be introduced during the first calcination or introduced during the second calcination.

A temperature of the second calcination may be higher than a temperature of the first calcination, and a difference between the temperature of the second calcination and the temperature of the first calcination may be 550°C or more.

The temperature of the first calcination may be 150 to 300°C.

A time of the first calcination may be 0.5 to 5 hours.

The temperature of the second calcination may be 800 to 900°C.

A time of the second calcination may be 1 to 12 hours.

A molar ratio (Ni/M) of nickel (Ni) to transition metal (M) in the transition metal precursor may be 0.2 to 0.4.

A molar ratio (Co/M) of cobalt (Co) to transition metal (M) in the transition metal precursor may be 0.2 or less.

The lithium raw material may be introduced such that a molar ratio (Li/M) of lithium (Li) to transition metal (M) is 1.1 or more.

The lithium transition metal oxide may be represented by the following Chemical Formula 1.

[Chemical Formula 1] Li₁+ₐ(NiₓCoMn_{z}M_{w})₁₋ₐO₂

In Chemical Formula 1, 0.1≤a≤0.3, 0.2≤x≤0.4, 0≤y≤0.2, 0.5≤z≤0.75, 0≤w≤0.2, x+y+z+w=1, and M is Zr, Al, B, Y, Mg, Ti, Nb, W, Sc, Si, V, Fe, Y, Mo, Ce, Hf, Ta, La, Sr, Sn, Sb, Zn, Cu, Ge, Mo, Ru, Ir, or a combination thereof.

Another embodiment of the present invention provides a positive electrode active material for a lithium secondary battery, comprising a lithium and manganese-excess lithium transition metal oxide in which oxidation and lithiation occur uniformly in a core portion and a surface portion thereof, wherein the lithium transition metal oxide has a molar ratio of lithium to the lithium transition metal oxide of 1.1 to 1.3, a molar ratio of manganese to transition metal of 0.5 to 0.75, and an average crystallite size of 40 to 50 nm.

The lithium transition metal oxide may have a BET specific surface area of 2.5 m²/g or more.

The lithium transition metal oxide may satisfy the following Equation 1. [Equation 1] BET/D₅₀ ≥ 0.4 m²/g·µm In Equation 1, BET is a BET specific surface area (m²/g) of the lithium transition metal oxide, and D₅₀ is an average particle diameter (D₅₀) of the lithium transition metal oxide.

The lithium transition metal oxide may be represented by the following Chemical Formula 1.

[Chemical Formula 1] Li₁+ₐ(NiₓCoMn_{z}M_{w})₁₋ₐO₂

In Chemical Formula 1, 0.1≤a≤0.3, 0.2≤x≤0.4, 0≤y≤0.2, 0.5≤z≤0.75, 0≤w≤0.2, x+y+z+w=1, and M is Zr, Al, B, Y, Mg, Ti, Nb, W, Sc, Si, V, Fe, Y, Mo, Ce, Hf, Ta, La, Sr, Sn, Sb, Zn, Cu, Ge, Mo, Ru, Ir, or a combination thereof.

Another embodiment of the present invention provides a positive electrode for a lithium secondary battery comprising the positive electrode active material described above.

Another embodiment of the present invention provides a lithium secondary battery comprising the positive electrode for a lithium secondary battery.

### [Effects of the Invention]

In the method for manufacturing a positive electrode active material for a lithium secondary battery according to one embodiment of the present invention, oxidation and lithiation of a transition metal precursor are performed separately through a first calcination and a second calcination, respectively, so that oxidation and lithiation of a core portion and a surface portion of the positive electrode active material can occur uniformly. Accordingly, electrochemical characteristics such as capacity, initial efficiency, and output characteristics of the positive electrode active material can be uniformly improved.

### [Brief Description of Drawings]

FIG. 1 is a graph showing XRD analysis results according to temperature when NiMn(OH)₂ is heated in an air atmosphere.
FIG. 2 is a graph showing XRD analysis results according to temperature when NiMn(OH)₂ and LiOH·H₂O are mixed to have a Li/Me ratio of 1.33 and then heated in an air atmosphere.
FIG. 3 is a graph showing analysis results of H₂O and CO₂ generation amounts by a TG-MS analysis method when NiMn(OH)₂ and LiOH·H₂O are mixed to have a Li/Me ratio of 1.33 and then heated in an air atmosphere.

### [Detailed Description of The Invention]

Terms such as first, second, and third are used to describe various parts, components, regions, layers, and/or sections, but are not limited thereto. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is for the purpose of referring to specific embodiments only and is not intended to limit the present invention. Singular forms used herein include plural forms unless the phrases clearly indicate the opposite meaning. The meaning of "comprising" as used in the specification specifies a specific characteristic, region, integer, step, operation, element, and/or component, and does not exclude the presence or addition of other characteristics, regions, integers, steps, operations, elements, and/or components.

When a part is referred to as being "on" or "above" another part, it may be directly on or above the other part, or another part may be involved therebetween. In contrast, when a part is referred to as being "directly on" another part, no other part is interposed therebetween.

Unless otherwise defined, all terms including technical and scientific terms used herein have the same meaning as commonly understood by one of ordinary skill in the art to which the present invention belongs. Terms defined in commonly used dictionaries are further interpreted as having meanings consistent with the related technical literature and the currently disclosed contents, and are not interpreted in an ideal or very formal sense unless defined.

In addition, unless otherwise specified, % means weight %, and 1 ppm is 0.0001 weight %.

In the present specification, the term "combination(s) thereof" described in the Markush-type expression refers to one or more mixtures or combinations selected from the group consisting of components described in the Markush-type expression, and means including any one or more selected from the group consisting of the components.

Hereinafter, embodiments of the present invention will be described in detail so that those of ordinary skill in the art to which the present invention belongs can easily implement the same. However, the present invention may be implemented in many different forms and is not limited to the embodiments described herein.

Recently, as the electric vehicle market expands, demands for further cost reduction and increased energy density are growing. Accordingly, instead of the conventionally commonly used ternary high-nickel NCM or NCA active materials, lithium-excess layered positive electrode active materials (OLO: Over-lithiated Oxide or LLO: Li-rich Layered Oxide) are being revisited. A lithium-excess layered positive electrode active material has a low Ni content, but can involve not only transition metals but also oxidation/reduction reactions of anions (oxygen) during battery operation. In addition, intercalation/deintercalation through excess lithium is possible. Due to this, the initial discharge capacity is 240 mAh/g or more, and capacity characteristics can be significantly improved compared to a positive electrode material of a general NCM composition. In addition, the content of relatively expensive nickel and cobalt can be reduced, and the content of inexpensive manganese can be increased, resulting in excellent economic efficiency.

However, the present inventors have confirmed that LLO positive electrode materials are very sensitive to changes in electrochemical characteristics according to the calcination process compared to positive electrode materials of a general NCM composition. This appears to be due to the instability of the coexistence of two phases, as the LLO positive electrode material is a solid-solution phase compound in which monoclinic structure Li₂MnO₃ and rhombohedral structure LiMO₂ (M=Ni, Co, Mn, etc.) are mixed, unlike a general NCM composition positive electrode material consisting of one phase.

Accordingly, the present inventors have completed the present invention by repeating research on calcination process conditions for optimizing the electrochemical characteristics of LLO positive electrode materials.

### 1. Method for Manufacturing Positive Electrode Active Material

The present inventors first analyzed a process of becoming a lithium transition metal oxide through mixing and then calcining a transition metal precursor and a lithium raw material to optimize the LLO positive electrode material calcination process profile.

When manufacturing an LLO positive electrode material, a compound in the form of M(OH)₂ or MCO₃ is mainly used as a transition metal precursor, and LiOH or Li₂CO₃ may be used as a lithium raw material. Calcination proceeds by mixing the transition metal precursor and the lithium raw material and then heat-treating them. At this time, during the temperature rising process during calcination, the transition metal precursor releases H₂O or CO₂ and is converted into an MOₓ oxide. At this time, as oxygen ions are continuously supplied into the lattice, oxidation occurs, and the lattice structure changes to a Rocksalt, Spinel, or Layered structure. Simultaneously with the gradual lattice structure change of the aforementioned intermediate oxide, LiOH or Li₂CO₃ continuously supplies lithium ions into the oxide, so that lithiation proceeds gradually. However, if the temperature rising process proceeds with one-step calcination, continuous oxidation of the transition metal precursor and supply of lithium into the lattice, i.e., lithiation, proceed simultaneously during the temperature rising process. Accordingly, there is a problem that uniform oxidation and lithiation of a core portion and a surface portion of the active material, which is a final product, are not achieved depending on the heat treatment environment or supply gas environment. In particular, since the LLO positive electrode material has instability in which two phases coexist, there is a problem that it is more vulnerable to non-uniformity of oxidation and lithiation.

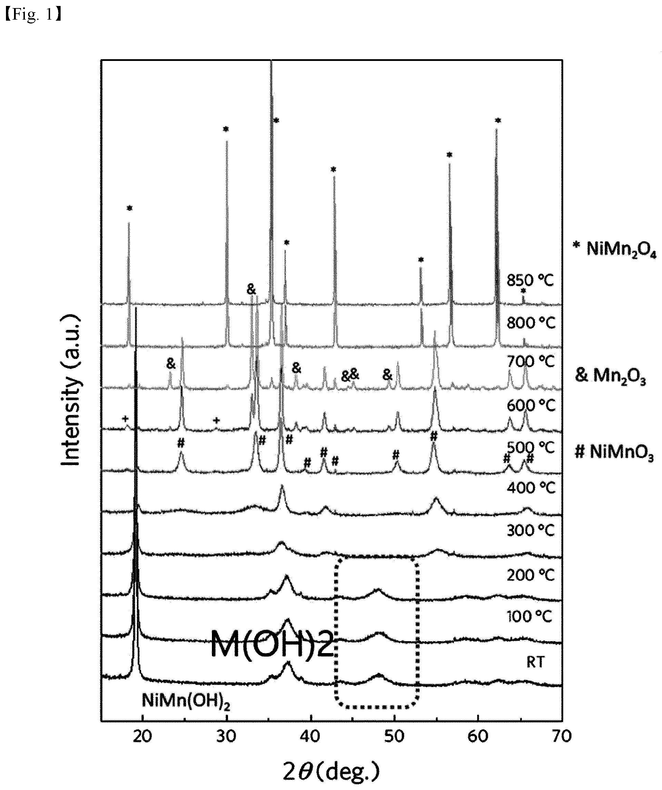

Accordingly, the present inventors conducted an experiment to more closely understand the calcination temperature range in which oxidation and lithiation occur in a calcination profile in which a transition metal precursor becomes a lithium transition metal oxide, and this is shown in FIGS. 1 to 3.

FIG. 1 is a graph of XRD analysis results according to temperature when NiMn(OH)₂ is heated in an air atmosphere. Referring to FIG. 1, looking at the 2θ value of about 48° corresponding to the characteristic peak of M(OH)₂, it could be confirmed that the M(OH)₂ characteristic peak completely disappeared between 200 and 300°C. That is, it could be confirmed that M(OH)₂ completely undergoes oxidation in a low-temperature region between 200 and 300°C and is converted into a MOₓ form.

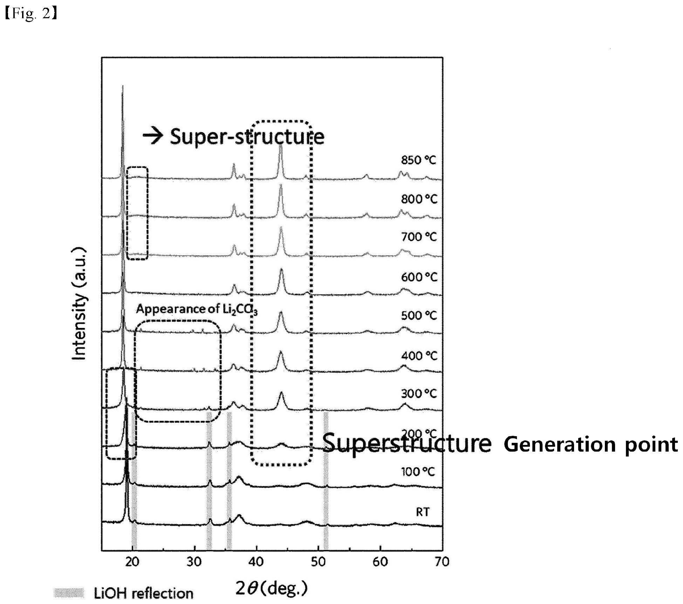

FIG. 2 is a graph of XRD analysis results according to temperature when NiMn(OH)₂ and LiOH·H₂O are mixed to have a Li/Me ratio of 1.33 and then heated in an air atmosphere. Referring to FIG. 2, it could be confirmed that the super-structure peak around the 2θ value of 44°, which indicates that lithiation has proceeded, began to be slightly generated at 200°C. That is, it could be confirmed that lithiation proceeds finely from about 200°C.

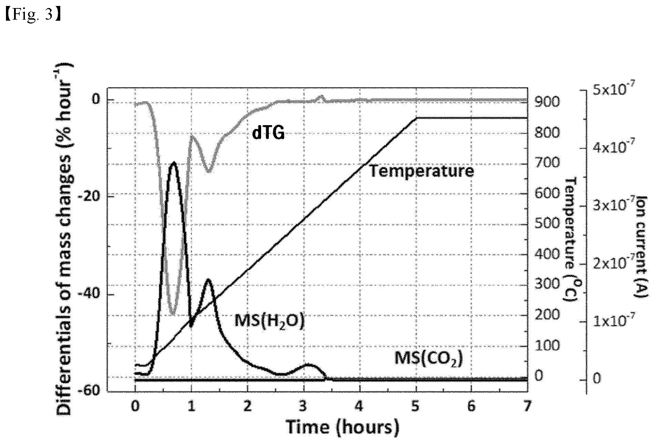

FIG. 3 is a graph showing analysis results of H₂O and CO₂ generation amounts by a TG-MS analysis method when NiMn(OH)₂ and LiOH·H₂O are mixed to have a Li/Me ratio of 1.33 and then heated in an air atmosphere. Referring to FIG. 3, it could be confirmed that H₂O is generated in a large amount by oxidation of M(OH)₂ and dehydration of LiOH·H₂O at less than about 200°C, and secondary and tertiary H₂O are generated as LiOH is oxidized as lithiation proceeds thereafter. This is consistent with the results of FIGS. 1 and 2.

Focusing on the interpretation results of the aforementioned FIGS. 1 to 3, the present inventors have found that by proceeding with the oxidation and lithiation of the transition metal precursor separately during the temperature rise of the calcination process, the degree of oxidation and lithiation of the core portion and the surface portion in the final active material can be made uniform.

Accordingly, one embodiment of the present invention provides a method for manufacturing a positive electrode active material for a lithium secondary battery, the method comprising: preparing a manganese-excess transition metal precursor having a molar ratio (Mn/M) of manganese (Mn) to transition metal (M) of 0.5 to 0.75; oxidizing the transition metal precursor by performing a first calcination; and forming a lithium and manganese-excess lithium transition metal oxide by lithiating the oxidized transition metal precursor through a second calcination.

Hereinafter, a method for manufacturing a positive electrode active material for a lithium secondary battery according to an embodiment of the present invention will be described in detail step by step.

First, a manganese-excess transition metal precursor having a molar ratio (Mn/M) of manganese (Mn) to transition metal (M) of 0.5 to 0.75 is prepared.

The transition metal precursor may be, for example, a transition metal hydroxide or a transition metal carbonate, and may be, for example, manufactured by adding a complexing agent-containing solution and a pH adjuster-containing solution to a transition metal-containing solution including a nickel raw material and optionally a cobalt raw material or a manganese raw material and performing a co-precipitation reaction.

The nickel raw material is not particularly limited as long as it is used in manufacturing a positive electrode active material precursor in the art. For example, the nickel raw material may be nickel-containing sulfate, acetate, nitrate, halide, sulfide, hydroxide, oxide, or oxyhydroxide, etc., and specifically may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, fatty acid nickel salt, nickel halide, or a combination thereof, but is not limited thereto.

The cobalt raw material is not particularly limited as long as it is used in manufacturing a positive electrode active material precursor in the art. For example, the cobalt raw material may be cobalt-containing sulfate, acetate, nitrate, halide, sulfide, hydroxide, oxide, or oxyhydroxide, etc., and specifically may be CoSO₄, CoSO₄·7H₂O, Co(OH)₂, CoOOH, Co(OCOCH₃)₂·4H₂O, Co(NO₃)₂·6H₂O, or a combination thereof, but is not limited thereto.

The manganese raw material is not particularly limited as long as it is used in manufacturing a positive electrode active material precursor in the art. For example, the manganese raw material may be manganese-containing sulfate, acetate, nitrate, halide, sulfide, hydroxide, oxide, oxyhydroxide, or a combination thereof, and specifically may be manganese salts such as MnSO₄, MnCO₃, Mn(NO₃)₂, manganese acetate, dicarboxylic acid manganese salt, manganese citrate, and fatty acid manganese salt, manganese oxides such as Mn₂O₃, MnO₂, and Mn₃O₄, oxyhydroxide, manganese chloride, or a combination thereof, but is not limited thereto.

The transition metal-containing solution may be manufactured by adding a nickel raw material and optionally a cobalt raw material or a manganese raw material to a solvent, specifically water, or a mixture of water and an organic solvent (e.g., alcohol, etc.) that can be uniformly mixed with water.

The complexing agent-containing solution performs a complex formation role and may include, for example, NH₃, NH₄OH, (NH₄)₂SO₄, NH₄NO₃, NH₄Cl, CH₃COONH₄, NH₄CO₃, or a combination thereof as a complexing agent, but is not limited thereto. Meanwhile, the complexing agent-containing solution may be used in the form of an aqueous solution, and at this time, water or a mixture of water and an organic solvent (e.g., alcohol, etc.) that can be uniformly mixed with water may be used as a solvent.

The pH adjuster-containing solution performs a precipitating agent or pH adjustment role and may include an alkaline compound such as a hydroxide of an alkali metal or an alkaline earth metal such as NaOH, KOH, or Ca(OH)₂, a hydrate thereof, or a combination thereof. Meanwhile, the pH adjuster-containing solution may also be used in the form of an aqueous solution, and at this time, water or a mixture of water and an organic solvent (e.g., alcohol, etc.) that can be uniformly mixed with water may be used as a solvent. At this time, the pH adjuster-containing solution may be added in an amount such that the pH of the reaction solution becomes 11 to 13.

The co-precipitation reaction may be performed under an inert atmosphere such as nitrogen or argon, and may be performed at a temperature of 30 to 70°C and at pH 11 to 13.

By the process as described above, particles of nickel-cobalt-manganese (-doping element) hydroxide are generated and precipitated in the reaction solution. The precipitated precursor particles are separated according to a general method, washed with water, and dried to obtain a precursor. The precursor may be a secondary particle formed by agglomeration of primary particles.

At this time, by controlling the concentrations of the nickel raw material, the cobalt raw material, and the manganese raw material, the molar ratio of nickel, cobalt, and manganese in the precursor can be controlled.

Accordingly, the molar ratio (Mn/M) of manganese (Mn) to transition metal (M) in the transition metal precursor may be 0.5 to 0.75. If the molar ratio of manganese to transition metal is too small, the manufacturing cost increases, the stability of the active material decreases, and the capacity improvement effect according to the excessive manganese content may be insignificant. If the molar ratio of manganese to transition metal is too large, lifespan characteristics may be deteriorated due to excessive use of the oxidation/reduction reaction of oxygen, and there may be a problem that manganese is eluted.

In addition, the molar ratio (Ni/M) of nickel (Ni) to transition metal (M) in the transition metal precursor may be 0.2 to 0.4. When the molar ratio of nickel to transition metal satisfies the range, the capacity, output, and lifespan characteristics of the battery may be more preferably implemented. More specifically, if the molar ratio of nickel to transition metal is too small, the amount of oxygen oxidation/reduction reaction increases too much, and the lifespan characteristics may be deteriorated. If the molar ratio of nickel to transition metal is too large, the amount of oxygen oxidation/reduction reaction decreases, and the capacity and output characteristics may be deteriorated.

The molar ratio (Co/M) of cobalt (Co) to transition metal (M) in the transition metal precursor may be 0.2 or less, more specifically 0.1 or less, or 0.05 or less, and more preferably, cobalt may not be included in the transition metal precursor. Conventionally, a common high-nickel NCM positive electrode active material had a problem that structural stability of the active material was deteriorated as it contained high-content nickel, so that the lifespan and safety of the battery were lowered, and to compensate for this, expensive cobalt was included. On the other hand, the lithium transition metal oxide according to the present invention has a relatively reduced nickel content and an excessive content of manganese that improves structural stability, so that the problem of deterioration of lifespan and safety of the battery can be reduced even without including expensive cobalt.

Meanwhile, a doping element may be doped in the preparation step of the positive electrode active material precursor. In this case, the doping element may be doped into the precursor by additionally introducing a doping raw material into the transition metal-containing solution and performing a co-precipitation reaction.

Next, the transition metal precursor is oxidized by performing a first calcination.

Next, the oxidized transition metal precursor is lithiated by performing a second calcination to form a lithium and manganese-excess lithium transition metal oxide.

As such, oxidation and lithiation of the transition metal precursor proceed separately through the first calcination and the second calcination, respectively, so that oxidation and lithiation of the core portion and the surface portion of the positive electrode active material can occur uniformly. Accordingly, electrochemical characteristics such as capacity, initial efficiency, and output characteristics of the battery can be uniformly improved.

At this time, the lithium raw material may be introduced during the first calcination, i.e., mixed together with the transition metal precursor, or introduced during the second calcination, i.e., mixed together with the transition metal precursor that has undergone the first calcination. However, when the lithium raw material is introduced during the second calcination, there may be an additional advantage of improving calcination productivity because the charging amount of LiOH·H₂O in the calcination furnace can be significantly increased by blowing away a large amount of H₂O that is not involved in the reaction during the first calcination.

The temperature of the second calcination is higher than the temperature of the first calcination, and the difference between the temperature of the second calcination and the temperature of the first calcination may be 550°C or more. That is, in order to proceed with the oxidation and lithiation of the transition metal precursor separately, the first calcination is proceeded at a low temperature where lithiation is kinetically not smooth to proceed with the oxidation of the transition metal precursor uniformly first, and the second calcination is proceeded at a high temperature to proceed with the lithiation uniformly.

More specifically, the temperature of the first calcination may be 150 to 300°C, and more specifically 150 to 260°C. If the temperature of the first calcination is too low, oxidation of the transition metal precursor does not occur smoothly, and electrochemical characteristics of the active material may be deteriorated. If the temperature of the first calcination is too high, not only oxidation of the transition metal precursor but also lithiation may occur, and electrochemical characteristics of the active material may be deteriorated.

The time of the first calcination may be 0.5 to 5 hours, and more specifically 1 to 3 hours. If the time of the first calcination is too short, oxidation of the transition metal precursor does not sufficiently occur, and the non-homogeneity of the oxidation degree inside the secondary particles may increase. If the time of the first calcination is too long, the total calcination time becomes long, and there may be a problem that productivity is reduced.

The temperature of the second calcination may be 800 to 900°C, and more specifically 820 to 880°C. If the temperature of the second calcination is too low, lithiation of the transition metal precursor does not occur smoothly, and electrochemical characteristics of the active material may be deteriorated. If the temperature of the second calcination is too high, the lithium-excess phase and the layered phase are solid-solubilized, and there may be a problem that performance is lowered.

The time of the second calcination may be 1 to 12 hours, and more specifically 8 hours to 12 hours. If the time of the second calcination is too short, lithiation of the transition metal precursor does not sufficiently occur, and electrochemical characteristics of the active material may be deteriorated. If the time of the second calcination is too long, the lithium-excess phase and the layered phase are solid-solubilized, and there may be a problem that performance is lowered.

In addition, the first calcination and the second calcination may be performed under an atmosphere of air, CO₂-free air, pure oxygen, or a mixed gas thereof. Since carbon dioxide inhibits the decomposition of calcium carbonate, it is advantageous to maintain a low partial pressure.

The lithium raw material may be introduced such that the molar ratio (Li/M) of lithium (Li) to transition metal (M) is 1.1 or more. By introducing an excess lithium raw material in this way, a lithium transition metal oxide of a lithium-excess composition can be formed.

The lithium transition metal oxide may be represented more specifically by the following Chemical Formula 1.

[Chemical Formula 1] Li₁+ₐ(NiₓCoMn_{z}M_{w})₁₋ₐO₂

In Chemical Formula 1, 0.1≤a≤0.3, 0.2≤x≤0.4, 0≤y≤0.2, 0.5≤z≤0.75, 0≤w≤0.2, x+y+z+w=1, and M is Zr, Al, B, Y, Mg, Ti, Nb, W, Sc, Si, V, Fe, Y, Mo, Ce, Hf, Ta, La, Sr, Sn, Sb, Zn, Cu, Ge, Mo, Ru, Ir, or a combination thereof.

In the lithium transition metal oxide of Chemical Formula 1, lithium may be included in a content corresponding to 1+a, and at this time, a may be 0.1≤a≤0.3. If a is too small, the effect of improving capacity characteristics according to the excessive lithium content may be insignificant. However, if a is too large, lifespan characteristics may be deteriorated due to a decrease in phase stability.

In the lithium transition metal oxide of Chemical Formula 1, nickel may be included in a content corresponding to x, i.e., 0.2≤x≤0.4. If the nickel content is too small, the amount of oxygen oxidation/reduction reaction increases too much, and the lifespan characteristics may be deteriorated. If the nickel content is too large, the amount of oxygen oxidation/reduction reaction decreases, and the capacity and output characteristics may be deteriorated.

In the lithium transition metal oxide of Chemical Formula 1, cobalt may be included in a content corresponding to y, i.e., 0≤y≤0.2. If the cobalt content is too small, it may be difficult to simultaneously achieve sufficient rate characteristics and high powder density of the active material. If the cobalt content is too large, the cost of raw materials may increase overall and the reversible capacity may decrease.

In the lithium transition metal oxide of Chemical Formula 1, manganese may be included in a content corresponding to z, i.e., 0.5≤z≤0.75. If the manganese content is too small, the production cost may be high, the stability of the active material decreases, and the capacity may be deteriorated. If the manganese content is too large, there may be problems of deterioration of lifespan characteristics and manganese elution due to excessive use of oxygen oxidation/reduction reaction.

In the lithium transition metal oxide of Chemical Formula 1, M, which is another doping element, may be included in a content corresponding to w, i.e., 0≤w≤0.2. The content of the doping element may be appropriately selected and controlled to implement a doping effect within a range that does not deteriorate electrochemical characteristics. At this time, M may be Zr, Al, B, Y, Mg, Ti, Nb, W, Sc, Si, V, Fe, Y, Mo, Ce, Hf, Ta, La, Sr, Sn, Sb, Zn, Cu, Ge, Mo, Ru, Ir, or a combination thereof.

### 2. Positive Electrode Active Material

Another embodiment of the present invention provides a positive electrode active material for a lithium secondary battery, comprising a lithium and manganese-excess lithium transition metal oxide in which oxidation and lithiation occur uniformly in a core portion and a surface portion thereof, wherein the lithium transition metal oxide has a molar ratio of lithium to the lithium transition metal oxide of 1.1 to 1.3, a molar ratio of manganese to transition metal of 0.5 to 0.75, and an average crystallite size of 40 to 50 nm.

The positive electrode active material for a lithium secondary battery according to another embodiment of the present invention may be manufactured according to the aforementioned positive electrode active material manufacturing method.

Accordingly, the positive electrode active material for a lithium secondary battery according to another embodiment of the present invention may be one in which oxidation and lithiation of a core portion and a surface portion occur uniformly, and electrochemical characteristics such as capacity, initial efficiency, and output characteristics of the battery can be improved in various ways.

Meanwhile, the lithium transition metal oxide according to the present invention may be a secondary particle formed by agglomeration of a plurality of primary particles. In the present specification, "primary particle" means a minimum particle unit that is distinguished as one lump when the cross section of the positive electrode active material is observed through a scanning electron microscope (SEM), and may consist of one crystallite or a plurality of crystallites. In the present specification, "crystallite" refers to a distinguished region in a form in which atoms in the primary particle form a lattice structure in a certain direction.

The lithium transition metal oxide may have a molar ratio of lithium to the lithium transition metal oxide of 1.1 to 1.3, and more specifically 1.1 to 1.2. As the molar ratio of lithium to transition metal increases, capacity characteristics are improved, but if it is too large, a problem of phase stability occurs due to excessive occurrence of oxygen oxidation/reduction reaction, and lifespan characteristics may be deteriorated due to this.

In addition, the molar ratio (Mn/M) of manganese to transition metal may be 0.5 to 0.75, and more specifically 0.55 to 0.7. If the molar ratio of manganese to transition metal is too small, manufacturing costs increase, active material stability decreases, and the capacity improvement effect according to the excessive manganese content may be insignificant. If the molar ratio of manganese to transition metal is too large, lifespan characteristics may be deteriorated due to excessive use of oxidation/reduction reactions of oxygen, and there may be a problem that manganese is eluted.

In addition, the molar ratio (Ni/M) of nickel to transition metal may be 0.2 to 0.4, and more specifically 0.25 to 0.4. When the molar ratio of nickel to transition metal satisfies the range, capacity, output, and lifespan characteristics of the battery may be more preferably implemented. More specifically, if the molar ratio of nickel to transition metal is too small, the amount of oxygen oxidation/reduction reaction increases too much, and lifespan characteristics may be deteriorated. If the molar ratio of nickel to transition metal is too large, the amount of oxygen oxidation/reduction reaction decreases, and capacity and output characteristics may be deteriorated.

In addition, the molar ratio (Co/M) of cobalt to transition metal may be 0.2 or less, more specifically 0.1 or less, or 0.05 or less, and more preferably, cobalt may not be included in the transition metal precursor. Conventionally, a common high-nickel NCM positive electrode active material had a problem that structural stability of the active material was deteriorated as it contained high-content nickel, so that lifespan and safety of the battery were lowered, and to compensate for this, expensive cobalt was included. On the other hand, the lithium transition metal oxide according to the present invention has a relatively reduced nickel content and an excessive content of manganese that improves structural stability, so that the problem of deterioration of lifespan and safety of the battery can be reduced even without including expensive cobalt.

In particular, the lithium transition metal oxide may have an average crystallite size of 40 to 50 nm, and more specifically 42 to 50 nm. In the present specification, "average crystallite size" can be estimated using peak broadening of XRD data and can be quantitatively calculated through the Scherrer equation.

The present inventors confirmed that when the positive electrode active material is manufactured according to the aforementioned manufacturing method, the crystallite size is obtained large as in the above range, and at this time, electrochemical characteristics are uniformly improved. The crystallite size in the NCM-based lithium transition metal oxide of a conventional general composition having one crystal phase tends to increase as the calcination temperature increases. However, the present inventors confirmed that when the low-temperature first calcination and the high-temperature second calcination are proceeded according to the manufacturing method of the present invention, the crystallite size is rather larger than when one-step calcination is proceeded for a long time at a temperature higher than the first calcination temperature and the second calcination temperature. This appears to be because the lithium and manganese-excess lithium transition metal oxide has two phases coexisting, so the crystallite size does not increase as the calcination temperature is raised indiscriminately, but rather because the crystal structure of the two phases develops more efficiently during low-temperature first calcination and high-temperature second calcination.

In addition, the lithium transition metal oxide may have a BET specific surface area of 2.5 m²/g or more, and more specifically 2.6 or 2.7 m²/g or more. As the BET specific surface area satisfies the range, lithium ion mobility is improved, so that capacity, initial efficiency, and output characteristics can be improved.

In addition, the lithium transition metal oxide may satisfy the following Equation 1. $BET / {D}_{50} \geq 0.4 {m}^{2} / g ⋅ μm$

In Equation 1, BET is the BET specific surface area (m²/g) of the lithium transition metal oxide, and D₅₀ is the average particle diameter (D₅₀) of the lithium transition metal oxide. In the present specification, the average particle diameter (D₅₀) may be defined as a particle diameter corresponding to 50% of the volume accumulation amount in a particle size distribution curve of particles. The average particle diameter (D₅₀) can be measured using, for example, a laser diffraction method. In addition, the specific surface area of the active material can be measured for the active material powder using a BET method (Surface area and Porosity analyzer) (Micrometrics, ASAP2020).

As the lithium transition metal oxide satisfies Equation 1, capacity, initial efficiency, and output characteristics of the battery can be improved. Generally, as the particle diameter of active material particles increases, the specific surface area increases. Accordingly, the BET/D₅₀ value can be used as a measure of how large the specific surface area is based on particles having the same particle diameter. The present inventors confirmed that when the positive electrode active material is manufactured according to the aforementioned manufacturing method, the BET/D₅₀ value appears significantly larger than in other cases, and electrochemical characteristics are uniformly improved accordingly. This appears to be because the two phases of the lithium-excess phase and the layered phase are not solid-solubilized. Meanwhile, the BET/D₅₀ value may be more specifically 0.42 or 0.44 m²/g·µm or more.

The lithium transition metal oxide may be represented more specifically by the following Chemical Formula 1.

[Chemical Formula 1] Li₁+ₐ(NiₓCoMn_{z}M_{w})₁₋ₐO₂

In Chemical Formula 1, 0.1≤a≤0.3, 0.2≤x≤0.4, 0≤y≤0.2, 0.5≤z≤0.75, 0≤w≤0.2, x+y+z+w=1, and M is Zr, Al, B, Y, Mg, Ti, Nb, W, Sc, Si, V, Fe, Y, Mo, Ce, Hf, Ta, La, Sr, Sn, Sb, Zn, Cu, Ge, Mo, Ru, Ir, or a combination thereof.

In the lithium transition metal oxide of Chemical Formula 1, lithium may be included in a content corresponding to 1+a, and at this time, a may be 0.1≤a≤0.3. If a is too small, the effect of improving capacity characteristics according to the excessive lithium content may be insignificant. However, if a is too large, lifespan characteristics may be deteriorated due to a decrease in phase stability.

In the lithium transition metal oxide of Chemical Formula 1, nickel may be included in a content corresponding to x, i.e., 0.2≤x≤0.4. If the nickel content is too small, the amount of oxygen oxidation/reduction reaction increases too much, and lifespan characteristics may be deteriorated. If the nickel content is too large, the amount of oxygen oxidation/reduction reaction decreases, and capacity and output characteristics may be deteriorated.

In the lithium transition metal oxide of Chemical Formula 1, cobalt may be included in a content corresponding to y, i.e., 0≤y≤0.2. If the cobalt content is too small, it may be difficult to simultaneously achieve sufficient rate characteristics and high powder density of the active material. If the cobalt content is too large, the cost of raw materials may increase overall and reversible capacity may decrease.

In the lithium transition metal oxide of Chemical Formula 1, manganese may be included in a content corresponding to z, i.e., 0.5≤z≤0.75. If the manganese content is too small, the production cost may be high, the stability of the active material decreases, and capacity may be deteriorated. If the manganese content is too large, there may be problems of deterioration of lifespan characteristics and manganese elution due to excessive use of oxygen oxidation/reduction reaction.

In the lithium transition metal oxide of Chemical Formula 1, M, which is another doping element, may be included in a content corresponding to w, i.e., 0≤w≤0.2. The content of the doping element may be appropriately selected and controlled to implement a doping effect within a range that does not deteriorate electrochemical characteristics. At this time, M may be Zr, Al, B, Y, Mg, Ti, Nb, W, Sc, Si, V, Fe, Y, Mo, Ce, Hf, Ta, La, Sr, Sn, Sb, Zn, Cu, Ge, Mo, Ru, Ir, or a combination thereof.

### 3. Positive Electrode and Lithium Secondary Battery

Another embodiment of the present invention provides a positive electrode for a lithium secondary battery comprising the aforementioned positive electrode active material.

More specifically, the positive electrode may comprise a positive electrode current collector and a positive electrode active material layer disposed on the positive electrode current collector and comprising the aforementioned positive electrode active material.

The positive electrode current collector is not particularly limited as long as it has conductivity without causing chemical changes in the battery, and for example, stainless steel, aluminum, nickel, titanium, sintered carbon, or one in which the surface of aluminum or stainless steel is treated with carbon, nickel, titanium, silver, etc. may be used. In addition, the positive electrode current collector may typically have a thickness of 3 to 500 µm, and fine irregularities may be formed on the surface of the positive electrode current collector to increase the adhesion of the positive electrode active material. For example, it can be used in various forms such as a film, sheet, foil, net, porous body, foam, and non-woven fabric.

The positive electrode active material layer may comprise a binder and/or a conductive material along with the aforementioned positive electrode active material.

At this time, the binder serves to improve adhesion between positive electrode active material particles and adhesion between the positive electrode active material and the positive electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluororubber, or various copolymers thereof, and one or more mixtures thereof may be used, but are not limited thereto. The binder may be included in an amount of 1 to 30 weight % based on the total weight of the positive electrode active material layer.

And, the conductive material is used to impart conductivity to the electrode, and in a configured battery, any material that has electronic conductivity without causing chemical changes can be used without particular limitation. Specific examples include graphite such as natural graphite or artificial graphite; carbon-based materials such as carbon black, acetylene black, ketjen black, channel black, furnace black, lamp black, thermal black, and carbon fibers; metal powders or metal fibers such as copper, nickel, aluminum, and silver; conductive whiskers such as zinc oxide and potassium titanate; conductive metal oxides such as titanium oxide; or conductive polymers such as polyphenylene derivatives, and one or more mixtures thereof may be used, but are not limited thereto. The conductive material may typically be included in an amount of 1 to 30 weight % based on the total weight of the positive electrode active material layer.

The positive electrode may be manufactured according to a general positive electrode manufacturing method except for using the aforementioned positive electrode active material.

Specifically, the positive electrode can be manufactured by applying a composition for forming a positive electrode active material layer comprising the aforementioned positive electrode active material and optionally a binder, a conductive material, or a solvent on a positive electrode current collector, followed by drying and rolling. At this time, the types and contents of the positive electrode active material, the binder, and the conductive material are as described above.

The solvent may be a solvent generally used in the art, and examples include dimethylsulfoxide (DMSO), isopropyl alcohol, N-methylpyrrolidone (NMP), acetone, or water, and one or more mixtures thereof may be used. The amount of the solvent used is sufficient as long as it has a viscosity that can dissolve or disperse the positive electrode active material, the conductive material, and the binder in consideration of the coating thickness of the slurry and the manufacturing yield, and then exhibit excellent thickness uniformity during coating for positive electrode manufacturing.

In addition, as another method, the positive electrode may be manufactured by casting the composition for forming a positive electrode active material layer on a separate support, and then laminating a film obtained by peeling from the support on a positive electrode current collector.

Another embodiment of the present invention provides a lithium secondary battery comprising the aforementioned positive electrode for a lithium secondary battery.

More specifically, the lithium secondary battery may comprise a positive electrode, a negative electrode, a separator, and an electrolyte.

The lithium secondary battery may optionally further comprise a battery container housing an electrode assembly of the positive electrode, the negative electrode, and the separator, and a sealing member for sealing the battery container.

The negative electrode may comprise a negative electrode current collector and a negative electrode active material layer positioned on the negative electrode current collector.

The negative electrode current collector is not particularly limited as long as it has high conductivity without causing chemical changes in the battery, and for example, copper, stainless steel, aluminum, nickel, titanium, sintered carbon, one in which the surface of copper or stainless steel is surface-treated with carbon, nickel, titanium, silver, etc., aluminum-cadmium alloy, etc. may be used. In addition, the negative electrode current collector may typically have a thickness of 3 to 500 µm, and similar to the positive electrode current collector, fine irregularities may be formed on the surface of the current collector to strengthen the binding force of the negative electrode active material. For example, it can be used in various forms such as a film, sheet, foil, net, porous body, foam, and non-woven fabric.

The negative electrode active material layer may optionally comprise a binder and a conductive material along with a negative electrode active material. As an example, the negative electrode active material layer may be manufactured by applying a composition for forming a negative electrode active material layer comprising a negative electrode active material and optionally a binder and a conductive material on a negative electrode current collector and drying, or by casting the negative electrode formation composition on a separate support and then laminating a film obtained by peeling from the support on a negative electrode current collector.

As the negative electrode active material, a compound capable of reversible intercalation and deintercalation of lithium may be used. Specific examples include carbonaceous materials such as artificial graphite, natural graphite, graphitized carbon fiber, and amorphous carbon; metallic compounds capable of alloying with lithium such as Si, Al, Sn, Pb, Zn, Bi, In, Mg, Ga, Cd, Si alloy, Sn alloy, or Al alloy; metal oxides that can dope and undope lithium such as SiO_{β} (0 < β < 2), SnO₂, vanadium oxide, and lithium vanadium oxide; or composites comprising the metallic compound and the carbonaceous material such as a Si-C composite or a Sn-C composite, and any one or a mixture of two or more thereof may be used. In addition, a metallic lithium thin film may be used as the negative electrode active material. In addition, as the carbon material, both low-crystalline carbon and high-crystalline carbon may be used. Typical examples of low-crystalline carbon include soft carbon and hard carbon, and typical examples of high-crystalline carbon include high-temperature calcined carbons such as natural graphite or artificial graphite of amorphous, planar, flaky, spherical, or fibrous form, Kish graphite, pyrolytic carbon, mesophase pitch based carbon fiber, meso-carbon microbeads, mesophase pitches, and petroleum or coal tar pitch derived cokes.

The binder and the conductive material may be the same as those described in the positive electrode above.

The separator separates the negative electrode and the positive electrode and provides a passage for lithium ions, and any separator typically used in lithium secondary batteries can be used without particular limitation, and especially one having low resistance to ion movement of an electrolyte and excellent electrolyte impregnation ability is preferable. Specifically, a porous polymer film, for example, a porous polymer film manufactured with a polyolefin-based polymer such as ethylene homopolymer, propylene homopolymer, ethylene/butene copolymer, ethylene/hexene copolymer, and ethylene/methacrylate copolymer, or a laminated structure of two or more layers thereof may be used. In addition, a typical porous non-woven fabric, for example, a non-woven fabric made of high-melting point glass fiber, polyethylene terephthalate fiber, etc. may be used. In addition, a coated separator comprising a ceramic component or a polymer material may be used to secure heat resistance or mechanical strength, and may optionally be used in a single-layer or multi-layer structure.

The electrolyte may include an organic liquid electrolyte, an inorganic liquid electrolyte, a solid polymer electrolyte, a gel-type polymer electrolyte, a solid inorganic electrolyte, a molten-type inorganic electrolyte, etc. that can be used in lithium secondary battery manufacturing, but is not limited thereto.

Specifically, the organic liquid electrolyte may comprise an organic solvent and a lithium salt.

As the organic solvent, any solvent that can serve as a medium through which ions involved in the electrochemical reaction of the battery can move can be used without particular limitation. Specifically, as the organic solvent, ester-based solvents such as methyl acetate, ethyl acetate, γ-butyrolactone, and ε-caprolactone; ether-based solvents such as dibutyl ether or tetrahydrofuran; ketone-based solvents such as cyclohexanone; aromatic hydrocarbon-based solvents such as benzene and fluorobenzene; carbonate-based solvents such as dimethylcarbonate (DMC), diethylcarbonate (DEC), methylethylcarbonate (MEC), ethylmethylcarbonate (EMC), ethylene carbonate (EC), and propylene carbonate (PC); alcohol-based solvents such as ethyl alcohol and isopropyl alcohol; nitriles such as R-CN (R is a C2 to C20 linear, branched, or cyclic hydrocarbon group, and may include a double bond, an aromatic ring, or an ether bond); amides such as dimethylformamide; dioxolanes such as 1,3-dioxolane; or sulfolanes may be used. Among these, carbonate-based solvents are preferable, and a mixture of a cyclic carbonate (e.g., ethylene carbonate or propylene carbonate, etc.) having high ionic conductivity and a high dielectric constant that can increase charge/discharge performance of the battery and a low-viscosity linear carbonate-based compound (e.g., ethylmethylcarbonate, dimethylcarbonate, or diethylcarbonate, etc.) is more preferable. In this case, the performance of the electrolyte may be excellent when the cyclic carbonate and the chain carbonate are mixed in a volume ratio of about 1:1 to about 1:9.

The lithium salt can be used without particular limitation as long as it is a compound that can provide lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂, etc. may be used. The concentration of the lithium salt is preferably used within a range of 0.1 to 2.0 M. When the concentration of the lithium salt is included in the range, the electrolyte has appropriate conductivity and viscosity, so that excellent electrolyte performance can be exhibited and lithium ions can effectively move.

In addition to the electrolyte components, the electrolyte may further comprise one or more additives for the purpose of improving lifespan characteristics of the battery, suppressing battery capacity reduction, improving discharge capacity of the battery, etc., for example, haloalkylene carbonate-based compounds such as difluoroethylene carbonate, pyridine, triethylphosphite, triethanolamine, cyclic ether, ethylene diamine, n-glyme, hexamethylphosphoric triamide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxy ethanol, or aluminum trichloride, etc. At this time, the additive may be included in an amount of 0.1 to 5 weight % based on the total weight of the electrolyte.

As described above, a lithium secondary battery comprising the positive electrode active material according to the present invention is useful in the fields of portable devices such as mobile phones, notebook computers, and digital cameras, and electric vehicles such as hybrid electric vehicles (HEVs), because it stably exhibits excellent discharge capacity, output characteristics, and capacity retention rate.

Accordingly, another embodiment of the present invention provides a battery module comprising the lithium secondary battery as a unit cell and a battery pack comprising the same.

The battery module or battery pack can be used as a power source for any one or more medium-to-large sized devices including power tools; electric vehicles including electric vehicles (EVs), hybrid electric vehicles, and plug-in hybrid electric vehicles (PHEVs); or systems for power storage.

Hereinafter, embodiments of the present invention will be described in more detail through examples. However, the following examples are merely a preferred embodiment of the present invention, and the present invention is not limited by the following examples.

### Example 1

### (1) Manufacturing of Positive Electrode Active Material

### (Preparation of transition metal hydroxide)

A transition metal hydroxide in the form of secondary particles having a composition of Ni₀.₃₅Mn₀.₆₅(OH)₂ was prepared through a co-precipitation reaction.

### (First calcination)

Thereafter, LiOH·H₂O was mixed in a calcination furnace such that the molar ratio (Li/M) of lithium (Li) to transition metal (M) in the transition metal precursor became 1.33, and then the temperature was gradually raised to perform a first calcination at a temperature of 200°C for 5 hours under an oxygen atmosphere.

### (Second calcination)

Thereafter, the temperature was gradually raised to perform a second calcination at a temperature of 850°C for 5 hours under an oxygen atmosphere, and then naturally cooled.

As a result, a lithium transition metal oxide having a composition of Li₁.₁₃(Ni₀.₃₅Mn₀.₆₅)₀.₈₇O₂ was manufactured.

### (2) Manufacturing of Lithium Secondary Battery

A slurry for electrode plate manufacturing was mixed in a ratio of the manufactured positive electrode active material:conductive material (carbon black, denka black):binder (PVDF, KF1100) = 92.5 : 3.5 : 4 wt%, and N-Methyl-2-pyrrolidone (NMP) was added to adjust the viscosity so that the solid content was about 30%. The manufactured slurry was coated on an Al foil having a thickness of 15 µm using a Doctor blade, and then dried and rolled. The electrode loading amount was 14.6 mg/cm², and the rolling density (25°C, 20 kN) was 3.1 g/cm³.

As an electrolyte, one in which 3.0 vol% of VC was added to 1 M LiPF₆ in EC:DMC:EMC=3:4:3 (vol%) based on the total amount of the electrolyte was used, and a coin cell was manufactured using a PP separator and a lithium negative electrode (200 µm, Honzo metal).

### Example 2

### (1) Manufacturing of Positive Electrode Active Material

### (Preparation of transition metal hydroxide)

A transition metal hydroxide in the form of secondary particles having a composition of Ni₀.₃₅Mn₀.₆₅(OH)₂ was prepared through a co-precipitation reaction.

### (First calcination)

Thereafter, the transition metal precursor was introduced into a calcination furnace, and then the temperature was gradually raised to perform a first calcination at a temperature of 200°C for 5 hours under an oxygen atmosphere.

### (Second calcination)

Thereafter, LiOH·H₂O was mixed in the calcination furnace such that the molar ratio (Li/M) of lithium (Li) to transition metal (M) in the transition metal precursor became 1.33, and then the temperature was gradually raised to perform a second calcination at a temperature of 850°C for 5 hours under an oxygen atmosphere, and then naturally cooled.

As a result, a lithium transition metal oxide having a composition of Li₁.₁₃(Ni₀.₃₅Mn₀.₆₅)₀.₈₇O₂ was manufactured.

### (2) Manufacturing of Lithium Secondary Battery

A lithium secondary battery was manufactured in the same manner as in Example 1, except that the manufactured positive electrode active material was used.

### Comparative Example 1

### (1) Manufacturing of Positive Electrode Active Material

### (Preparation of transition metal hydroxide)

A transition metal hydroxide in the form of secondary particles having a composition of Ni₀.₃₅Mn₀.₆₅(OH)₂ was prepared through a co-precipitation reaction.

### (Calcination)

Thereafter, LiOH·H₂O was mixed in a calcination furnace such that the molar ratio (Li/M) of lithium (Li) to transition metal (M) in the transition metal precursor became 1.33, and then the temperature was gradually raised to perform calcination at a temperature of 950°C for 10 hours under an oxygen atmosphere. Thereafter, it was naturally cooled.

As a result, a lithium transition metal oxide having a composition of Li₁.₁₃(Ni₀.₃₅Mn₀.₆₅)₀.₈₇O₂ was manufactured.

### (2) Manufacturing of Lithium Secondary Battery

A lithium secondary battery was manufactured in the same manner as in Example 1, except that the manufactured positive electrode active material was used.

Table 1 below is a table summarizing the calcination process conditions of Examples and Comparative Examples.

**[Table 1]**

| | Lithium Raw Material Introduction Point | First Calcination Temperature (°C) | First Calcination Time (h) | Second Calcination Temperature (°C) | Second Calcination Time (h) |
|---|---|---|---|---|---|
| Example 1 | During first calcination | 200 | 5 | 850 | 5 |
| Example 2 | During second calcination | 200 | 5 | 850 | 5 |
| Comparative Example 1 | During first calcination | - | - | 850 | 10 |

Table 2 below summarizes the evaluation results of physical properties of the positive electrode active materials and electrochemical characteristics of lithium secondary batteries according to Experimental Example 1 and Experimental Example 2 to be described later.

**[Table 2]**

| | Physical Properties of Positive Electrode Active Material | | | | Initial Charge/Discharge (45°C, 2.0~4.65 V) | | | Subsequent Cycles (25°C, 2.5~4.4 V) | | |
|---|---|---|---|---|---|---|---|---|---|---|
| | Average Crystallite Size (nm) | D50 (µm) | BET (m²/g) | BET/ D50 (m²/g·µm) | 0.1C Charge (mAh/g) | 0.1C Discharge (mAh/g) | Initial Efficiency (%) | 0.1C Charge (mAh/g) | 0.33C Discharge (mAh/g) | 0.33C/0. 1C (%) |
| Example 1 | 44.6 | 6.29 | 2.78 | 0.442 | 312.0 | 278.6 | 89.3 | 214.4 | 200.0 | 93.3 |
| Example 2 | 49.1 | 6.41 | 4.19 | 0.654 | 313.0 | 278.8 | 89.1 | 213.7 | 200.4 | 93.8 |
| Comparative Example 1 | 39.5 | 6.63 | 1.66 | 0.250 | 314.9 | 268.7 | 85.3 | 198.5 | 179.7 | 90.5 |

### Experimental Example 1: Evaluation of Physical Properties of Positive Electrode Active Material

### (1) Evaluation of Average Particle Diameter (D₅₀)

For the active material powder, the particle diameter corresponding to 50% of the volume accumulation was measured using a laser diffraction method.

### (2) Evaluation of Specific Surface Area

For the active material powder, the specific surface area was measured using a BET method (Surface area and Porosity analyzer) (Micromeritics, ASAP2020).

### (3) Evaluation of Average Crystallite Size

The XRD data of the active material were measured using Bruker's D8 Discover with GADDS XRD equipment, and the average crystallite size was evaluated through the Rietveld refinement method embedded in Bruker's DIFFRAC.TOPAS program.

Referring to Table 2, it was confirmed that the positive electrode active materials of Examples 1 and 2, in which the calcination process conditions were appropriately controlled within the ranges according to the present invention, exhibited larger average crystallite sizes, BET specific surface areas, and BET/D₅₀ values compared to Comparative Example 1.

### Experimental Example 2: Evaluation of Electrochemical Characteristics of Lithium Secondary Battery

### (1) Evaluation of Initial Capacity and Initial Efficiency (45°C, 0.1C, 2.0 to 4.65 V)

After manufacturing lithium secondary battery half-cells, they were aged at 45°C for 12 hours, and then a charge/discharge test was performed. For the initial capacity evaluation, the reference capacity was set to 200 mAh/g. Charging was performed at a constant current of 0.1C to 4.25 V and then switched to a constant voltage until the end current reached 0.05C. After a rest time of 10 minutes following the charge, discharging was performed at a constant current of 0.1C, based on a reference capacity of 200 mAh/g, until 2.5 V was reached.

### (2) Evaluation of Output Characteristics (25°C, 0.33C/0.1C, 2.5 to 4.4 V)

The output characteristics were evaluated by comparing the capacity during 0.1C charge-0.1C discharge with the capacity during 0.1C charge-0.33C discharge.

Referring to Table 2, in the case of Examples 1 and 2 where the calcination process conditions were appropriately controlled within the ranges according to the present invention, it was confirmed that the initial discharge capacity, initial efficiency, and output characteristics were significantly improved compared to Comparative Example 1.

While preferred embodiments of the present invention have been described above, the present invention is not limited thereto. Various modifications can be implemented within the scope of the claims, the detailed description of the invention, and the accompanying drawings, and such modifications naturally fall within the scope of the present invention. Therefore, the substantial scope of the present invention will be defined by the appended claims and their equivalents.

## Claims

1. A method for manufacturing a positive electrode active material for a lithium secondary battery, comprising:
preparing a manganese-excess transition metal precursor having a molar ratio (Mn/M) of manganese (Mn) to transition metal (M) of 0.5 to 0.75;
oxidizing the transition metal precursor by performing a first calcination; and
forming a lithium and manganese-excess lithium transition metal oxide by lithiating the oxidized transition metal precursor through a second calcination.

2. The method for manufacturing a positive electrode active material for a lithium secondary battery of claim 1, wherein a lithium raw material is introduced during the first calcination or introduced during the second calcination.

3. The method for manufacturing a positive electrode active material for a lithium secondary battery of claim 1, wherein a temperature of the second calcination is higher than a temperature of the first calcination, and a difference between the temperature of the second calcination and the temperature of the first calcination is 550°C or more.

4. The method for manufacturing a positive electrode active material for a lithium secondary battery of claim 1, wherein the temperature of the first calcination is 150°C to 300°C.

5. The method for manufacturing a positive electrode active material for a lithium secondary battery of claim 1, wherein a time of the first calcination is 0.5 to 5 hours.

6. The method for manufacturing a positive electrode active material for a lithium secondary battery of claim 1, wherein the temperature of the second calcination is 800°C to 900°C.

7. The method for manufacturing a positive electrode active material for a lithium secondary battery of claim 1, wherein a time of the second calcination is 1 to 12 hours.

8. The method for manufacturing a positive electrode active material for a lithium secondary battery of claim 1, wherein a molar ratio (Ni/M) of nickel (Ni) to transition metal (M) in the transition metal precursor is 0.2 to 0.4.

9. The method for manufacturing a positive electrode active material for a lithium secondary battery of claim 1, wherein a molar ratio (Co/M) of cobalt (Co) to transition metal (M) in the transition metal precursor is 0.2 or less.

10. The method for manufacturing a positive electrode active material for a lithium secondary battery of claim 2, wherein the lithium raw material is introduced such that a molar ratio (Li/M) of lithium (Li) to transition metal (M) is 1.1 or more.

11. The method for manufacturing a positive electrode active material for a lithium secondary battery of claim 1, wherein the lithium transition metal oxide is represented by the following Chemical Formula 1:
[Chemical Formula 1] Li₁+ₐ(NiₓCoMn_{z}M_{w})₁₋ₐO₂
In Chemical Formula 1, 0.1≤a≤0.3, 0.2≤x≤0.4, 0≤y≤0.2, 0.5≤z≤0.75, 0≤w≤0.2, x+y+z+w=1, and M is Zr, Al, B, Y, Mg, Ti, Nb, W, Sc, Si, V, Fe, Y, Mo, Ce, Hf, Ta, La, Sr, Sn, Sb, Zn, Cu, Ge, Mo, Ru, Ir, or a combination thereof.

12. A positive electrode active material for a lithium secondary battery, comprising a lithium and manganese-excess lithium transition metal oxide in which oxidation and lithiation occur uniformly in a core portion and a surface portion thereof,
wherein the lithium transition metal oxide has a molar ratio of lithium to the lithium transition metal oxide of 1.1 to 1.3, a molar ratio of manganese to transition metal of 0.5 to 0.75, and an average crystallite size of 40 to 50 nm.

13. The positive electrode active material for a lithium secondary battery of claim 12, wherein the lithium transition metal oxide has a BET specific surface area of 2.5 m²/g or more.

14. The positive electrode active material for a lithium secondary battery of claim 12, wherein the lithium transition metal oxide satisfies the following Equation 1: [Equation 1] BET/D₅₀ ≥ 0.4 m²/g·µm In Equation 1, BET is a BET specific surface area (m²/g) of the lithium transition metal oxide, and D₅₀ is an average particle diameter (D₅₀) of the lithium transition metal oxide.

15. The positive electrode active material for a lithium secondary battery of claim 12, wherein the lithium transition metal oxide is represented by the following Chemical Formula 1:
[Chemical Formula 1] Li₁+ₐ(NiₓCoMn_{z}M_{w})₁₋ₐO₂
In Chemical Formula 1, 0.1≤a≤0.3, 0.2≤x≤0.4, 0≤y≤0.2, 0.5≤z≤0.75, 0≤w≤0.2, x+y+z+w=1, and M is Zr, Al, B, Y, Mg, Ti, Nb, W, Sc, Si, V, Fe, Y, Mo, Ce, Hf, Ta, La, Sr, Sn, Sb, Zn, Cu, Ge, Mo, Ru, Ir, or a combination thereof.

16. A positive electrode for a lithium secondary battery, comprising the positive electrode active material of any one of claims 12 to 15.

17. A lithium secondary battery comprising the positive electrode for a lithium secondary battery of claim 16.
